# EUROPEAN PATENT SPECIFICATION

(11) **EP 4 255 253 B1**
(45) Date of publication and mention of the grant of the patent: **23.04.2025**
(21) Application number: 21827425.6
(22) Date of filing: 29.11.2021
(51) Int. Cl.: A47B 47/02, A47B 87/00, F16B 12/34, F16B 12/36, A47B 96/20

(54) **A MODULAR UNIT FOR MAKING A BOX-LIKE MODULE FOR A PIECE OF FURNITURE, A BOX-LIKE MODULE, A PIECE OF FURNITURE AND A METHOD FOR MAKING A MODULAR UNIT**
MODULARE EINHEIT ZUR HERSTELLUNG EINES KASTENFÖRMIGEN MODULS FÜR EIN MÖBEL, KASTENFÖRMIGES MODUL, MÖBEL UND VERFAHREN ZUR HERSTELLUNG EINER MODULAREN EINHEIT
UNITÉ MODULAIRE PERMETTANT DE FABRIQUER UN MODULE DE TYPE BOÎTE POUR UN MEUBLE, MODULE DE TYPE BOÎTE, MEUBLE ET PROCÉDÉ DE FABRICATION D'UNE UNITÉ MODULAIRE

(30) Priority: 04.12.2020 IT 202000029996
(43) Date of publication of application: 11.10.2023
(73) Proprietor: VD Invest SA, 1700 Fribourg (CH)
(72) Inventor: VEZZONI, Massimo, 26010 Sergnano, Cremona (IT)
(74) Representative: De Lorenzo, Danilo
(86) International application number: PCT/IB2021/061069
(87) International publication number: WO 2022/118172

(56) References cited:
- EP-A1- 1 769 701
- WO-A1-2023/092162
- US-A- 1 075 369
- US-A1- 2013 337 220
- US-A1- 2017 238 701

## Description

The invention relates to a modular unit for making a box-like module for a piece of furniture, and a method for making the modular unit.

There are known modular units in the prior art for making box-like modules connected to each other in order to form pieces of furniture, such as kitchen cabinets, bookcases, or display furniture for the home or office. Examples of such pieces of furniture are disclosed in US 2017/238701 A1, US 2013/337220 A1, EP 1 769 701 A1 & WO 2023 092 162 A1.

Typically, these solutions involve wooden modules which the end user or installation specialist may connect together to form the final piece of furniture.

However, the known solutions have some problems.

First, the composition of an entire piece of furniture requires the transport of heavy and cumbersome modular elements or panels to the installation location and the resulting need to anticipate and plan for the weight and volumes required during transport.

Furthermore, once the type of furniture is defined, it is not possible to rearrange the modular components in order to change the final esthetic appearance.

In addition, the modular compositions of the prior art have large module thicknesses that are poorly suited to making furniture with light and linear esthetic characteristics, and are also particularly heavy to move around.

In addition, with the prior art systems it is not generally possible to vary, as desired, the exterior finishes of the furniture, or even to vary the finishes of each front of the box-like module defining the basic modular element, after final installation of the furniture.

In other words, it is not possible over time to vary the shape and/or color of the walls that constitute the space of the furniture in a simple and immediate way.

Furthermore, assembling the prior art modules is often complicated and difficult due to the various types of attachments between the panels and modules.

There is consequently a strong need to propose a modular unit for making a box-like module for a piece of furniture, a corresponding box-like module, a piece of furniture, a finish element that may be attached to the modular unit, a door for a piece of furniture, and a method for making the modular unit, capable of overcoming the drawbacks of the prior art.

This requirement is met by a modular unit for making a box-like module for a piece of furniture, a corresponding box-like module, a piece of furniture, a finish element that may be attached to the modular unit, a door for a piece of furniture, and a method for making the modular unit, in accordance with the appended independent claims. The dependent claims describe preferred or advantageous embodiments.

The features and advantages of the modular unit for making a box-like module for a piece of furniture, the corresponding box-like module of the piece of furniture, the finish element that may be attached to the modular unit, the door for a piece of furniture, and the method for making the modular unit will become apparent from the following description of preferred embodiment examples thereof, given as non-limiting examples in reference to the accompanying figures, in which:
Figure 1 shows an exploded axonometric view of a box-like module for a piece of furniture according to an embodiment of the present invention;
Figure 1a shows an enlarged detail of figure 1;
Figure 1b shows an exploded axonometric view of a box-like module for a piece of furniture according to an embodiment of the present invention which, compared to the embodiment of figure 1, differs substantially due to the absence of a finish element on the back panel;
Figure 1c shows an exploded axonometric view of a box-like module for a piece of furniture according to an embodiment of the present invention which, compared to the embodiment of figure 1, differs due to the presence of a covering top finish element and a bottom finish element;
Figure 2 shows an axonometric view of a piece of sheet metal for making a modular unit in an unfolded configuration;
Figure 2a shows an axonometric view of a modular unit made by folding the sheet metal in figure 2;

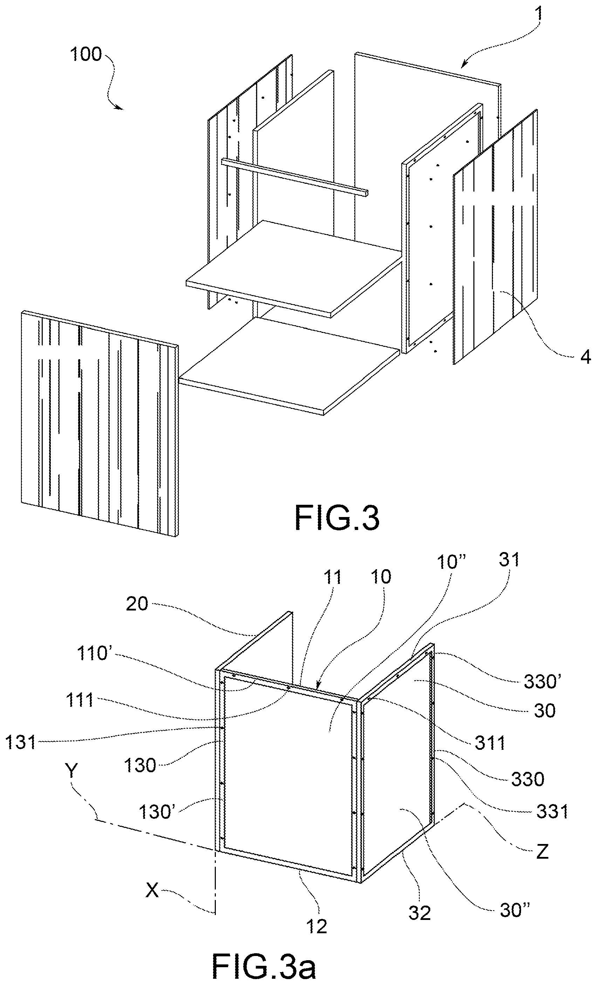

Figure 3 shows an exploded axonometric view of a box-like module for a piece of furniture not according to the present invention;
Figure 3a shows an axonometric view of the modular unit included in the box-like module for a piece of furniture in figure 3;
Figure 4 shows an exploded axonometric view of a piece of furniture according to an embodiment of the present invention, made by joining two modular units and attaching at least two finish elements;
Figure 5 is an enlarged detail of figure 4;
Figure 5a shows an axonometric view of a first module attachment element;
Figure 5b shows an axonometric view of a second module attachment element;
Figure 5c shows an axonometric view of a third module attachment element;
Figure 6 shows a detail of a finish element and of an attachment element;
Each of figures 7 and 7a shows a configuration for insertion of an attachment element into an elastic element;
Figure 8 is a top plan view of a cross-section of a right panel portion of a modular unit and of an element inserted into the right panel, according to an embodiment of the present invention;
Figure 9 shows an exploded axonometric view of a finish element according to an embodiment of the present invention, and of a door according to an embodiment of the present invention when the finish element is coupled to a finish holding frame made of sheet metal;
Figure 10 shows an exploded axonometric view of a finish element according to another embodiment of the present invention, and of a door according to another embodiment of the present invention when the finish element is coupled to a finish holding frame made of aluminum;
Figure 10a shows an axonometric view of a door according to an embodiment of the present invention when the finish element is coupled to a finish holding frame, preferably made of aluminum;
Figure 11 shows an exploded axonometric view of a finish element according to yet another embodiment of the present invention, and of a door according to another embodiment of the present invention when the finish element is coupled to a finish holding frame made of sheet metal;
Figure 12 shows an exploded axonometric view of a finish element according to another embodiment of the present invention, and of a door according to another embodiment of the present invention when the finish element is coupled to a finish holding frame made of aluminum.

In reference to the aforesaid figures, reference number 1 refers to a modular unit 1 as a whole for making a box-like module 100, 101 for a piece of furniture, for example for a modular kitchen or for a bookcase or for a cabinet or for bathroom furniture and the like.

The modular unit 1 comprises a back panel 10, a right panel 20, and a left panel 30, made of thin sheet metal and coupled together so as to define an inner cavity I in the form of an open box.

Each of these right 20 and left 30 panels comprises an inner panel face 20', 30' facing the inner cavity I and an outer panel face 20" not facing the inner cavity I. In addition, each right panel 20 or left panel 30 lies primarily along a first direction X and a second direction Y perpendicular to the first direction X and, much less, along a third direction Z perpendicular to the first direction X and to the second direction Y. In other words, each right panel 20 or left panel 30 is a panel of small thickness in the third direction Z. Preferably, the thin sheet metal is a thin sheet metal made of steel having a thickness of less than 2 millimeters in the Z direction, even more preferably less than 1 millimeter.

Each right panel 20 and left panel 30 comprises at least one upper panel edge 21, 31 and a lower panel edge 22, 32 delimiting the extent of the panel in the first direction X.

In addition, in the vicinity of said upper edge 21, 31 and lower edge 22, 32, each right or left panel 20, 30 comprises a fold 210, 220 in the sheet metal comprising a blocking wall 210', 220'; 310' extending along the first direction X much less compared to the extent of the entire panel in the same first direction X and at a distance from the outer panel face 20". In other words, the blocking wall 210', 220', 230' is a lip distanced from the outer panel face 20''. Preferably, this lip extends in the first direction X by a length of less than 10% compared to the extent of the entire panel along the same direction X, even more preferably by a length of less than 5% compared to the extent of the entire panel along the same first direction X.

Attachment openings 211, 221; 311 are made in this blocking wall 210', 220', 310' in order to removably attach a finish element 4 or another modular unit 1.

The back panel 10 also comprises an inner panel face 10' facing the inner cavity I and an outer panel face 10" not facing the inner cavity I. In addition, the back panel 10 also preferably lies primarily along a first direction X and a second direction Y perpendicular to the first direction X and, much less, along a third direction Z perpendicular to the first direction X and to the second direction Y.

In other words, each back panel 10, right panel 20, or left panel 30 is a panel of small thickness in the third direction Z.

In addition, each panel 10, 20, 30 has a square or rectangular plan-view shape.

Each back panel 10 also comprises at least one upper panel edge 11 and one lower panel edge 12 delimiting the extent of the panel in the first direction X.

According to the invention, in the vicinity of this upper edge 11 and lower edge 12, each back panel 10 comprises a fold in the sheet metal comprising a blocking wall 110' lying along the first direction X much less compared to the extent of the entire panel in the same direction X, and being distanced from the outer panel face 10" in entirely the same way as described earlier for the right panel 20 or the left panel 30. Consequently, attachment openings 111 for removably attaching a finish element 4 or another modular unit 1 are similarly made in the blocking wall 110' of the back panel 10.

Preferably, the attachment openings 111, 211, 221, and 311 are through openings.

According to one embodiment not shown in the figures, the modular unit 1 comprises a reinforcement panel joined to the back panel 10 and/or the right panel 20 and/or the left panel 30 along the outer panel face 10", 20", 30", preferably by means of an embedded connection or by an adhesive. Preferably, in this variant the reinforcement panel is secured between the blocking wall 110', 210', 220'; 310' and the outer panel face 10'', 20", 30''. Preferably, the reinforcement panel is received in the U-shaped seat made between the blocking wall 110', 210', 220', and 310' and the outer panel face 10", 20'', 30''. Preferably, the reinforcement panel is only secured between the blocking wall 110', 210', 220', 310' and the outer panel face 10'', 20'', 30" without any additional gluing. Preferably, the reinforcement panel is made of a non-metal material. For example, it is made of a multi-layer material with synthetic resins, such as a laminate or a multi-layer material or melamine particle board, or a plastic resin or melamine resin or honeycomb PET.

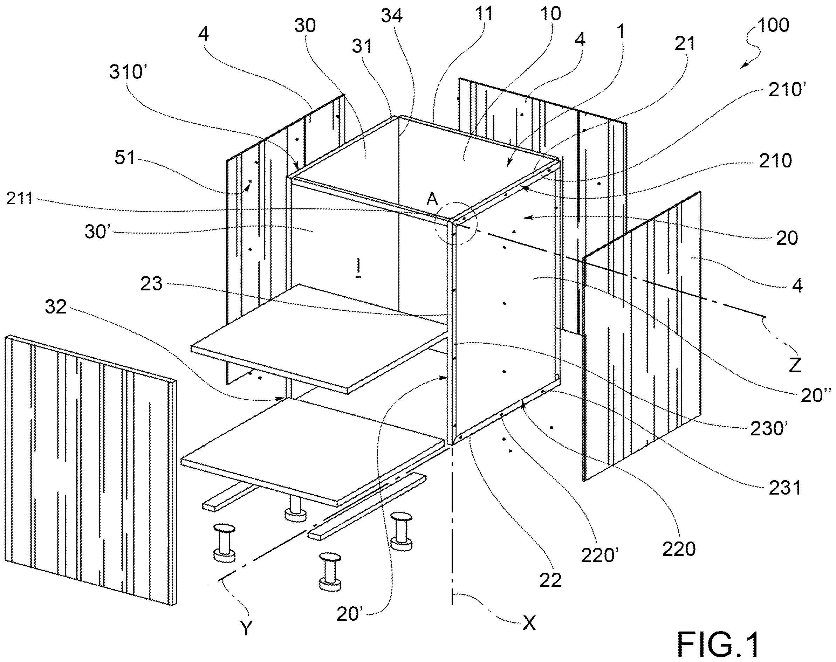

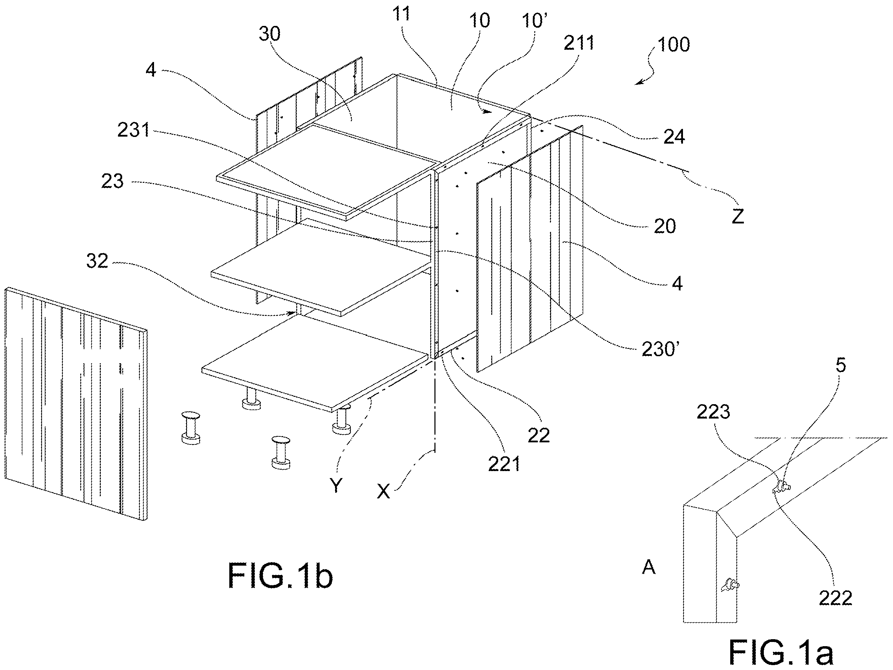

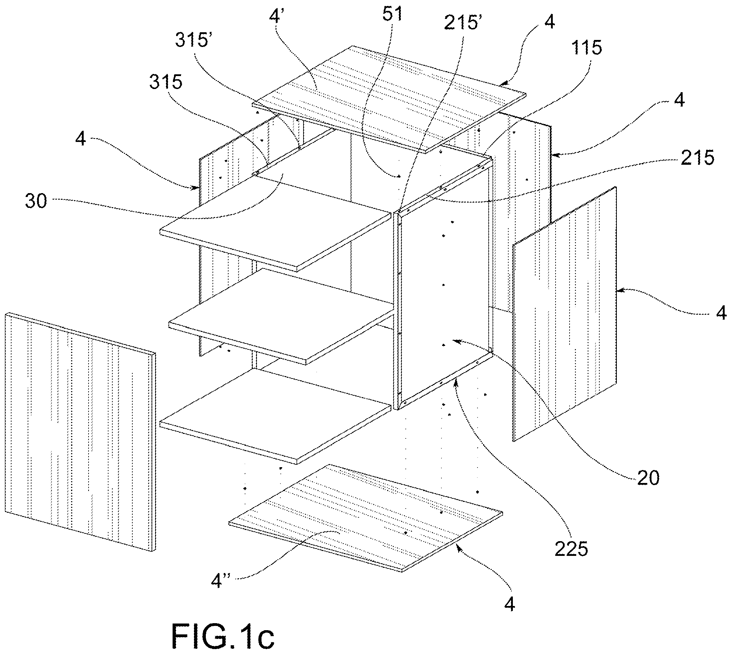

According to the invention, the back panel 10, the right panel 20, and the left panel 30, are made as a single part by folding a single piece of sheet metal 1', preferably along weakening lines 12', 13' of the sheet metal 1', as shown, for example, in figures 1 to 2a.

Preferably, each said right panel 20 and left panel 30 comprises at least one left panel edge 23, 33 and a right panel edge 24, 34 that delimit the extent of the panel in the second direction Y. In the vicinity of at least the left edge 23, 33 each right panel and left panel comprises an auxiliary fold 230, 330 of the sheet metal comprising an auxiliary blocking wall 230', 330' extending along the second direction Y much less compared to the extent of the entire panel in the same second direction Y. This auxiliary blocking wall 230', 330' is at a distance from the outer panel face 20", 30". In addition, auxiliary attachment openings 231, 331 are made in this auxiliary blocking wall 230', 330' in order to removably attach a finish element 4 or another modular unit 1.

Preferably, the auxiliary blocking wall 230', 330' extends along the second direction Y by a length of less than 10% compared to the extent of the entire panel along the same second direction Y, even more preferably by a length of less than 5% compared to the extent of the entire panel along the same second direction Y.

It is clear that, in an embodiment variant, the back panel 10 also comprises an auxiliary fold 130 and an auxiliary blocking wall 130', entirely comparable to that described in the preceding paragraph for the right panel 20 or the left panel 30.

Preferably, the attachment openings 111, 211, 221 and the auxiliary attachment openings 131, 231, 331 are holes comprising an area with a reduced section 222 compared to an area with a normal section 223 to allow the head of a screw or pin 5 to pass through the normal section region 223 and prevent the screw or pin 5 from coming out of the reduced section region 222, as shown for example in figure 1a.

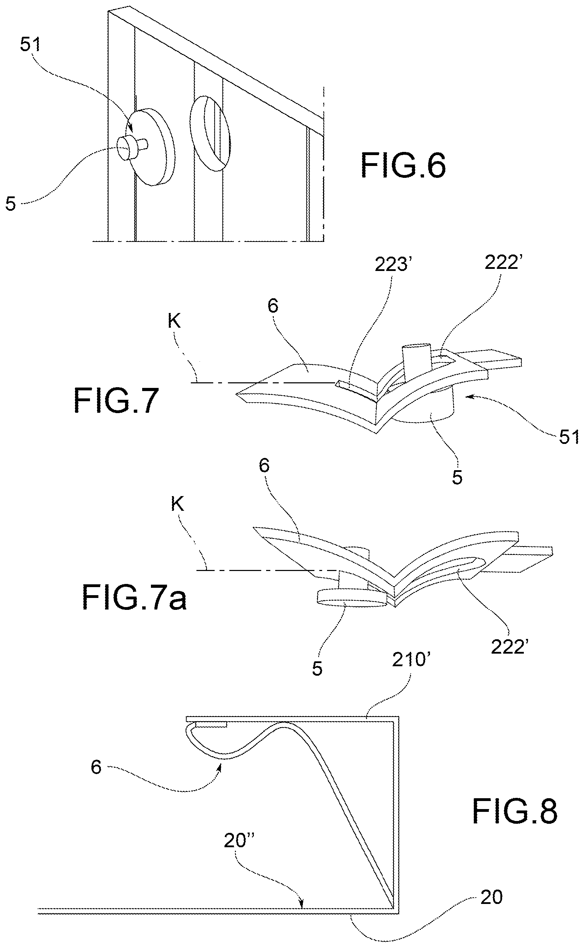

According to one embodiment, at least one elastic element 6 capable of undergoing an elastic deformation and securing the screw or pin 5 by "snap" connection is positioned behind the blocking wall 110'; 210', 220'; 310' and/or behind the auxiliary blocking wall 130', 230', that is, on the side of the blocking wall or the auxiliary blocking wall facing the outer panel face 20" in the vicinity of one or more of the attachment openings 111, 211, 221 or auxiliary attachment openings 131, 231, as shown for example in figures 7, 7a, and 8. This occurs in such a way that translation of the screw or pin 5 in a direction K perpendicular to the insertion direction of the screw/pin into the attachment openings or auxiliary attachment openings is prevented. This insertion direction of the screw is substantially parallel to the third direction Z.

According to one embodiment, such as that shown in figures 7 and 7a, the elastic element 6 comprises an elastic element hole having a reducedsection region 222' compared to a normal section region 223' to allow the head of a screw or pin 5 to pass through the normal section region 223' and prevent the screw or pin 5 from coming out of the reduced section region 222'.

According to one embodiment, such as that shown in figure 1c, the right panel 20 and/or the left panel 30 and/or the back panel 10 comprises a horizontal blocking wall 115, 215, 315, 225 in the vicinity of the upper panel edge 21, 31 or the lower panel edge 22, 32 that lies along a plane parallel to the third direction Z and possibly perpendicular only to the first direction X.

Attachment openings 215', 315' are made in this horizontal blocking wall 115, 215, 315, 225 in order to removably attach a finish element 4 or another modular unit 1. As shown in figure 1c, in this variant the finish element 4, when held by means of the attachment elements 51 in the attachment openings 215', 315', constitutes a covering top finish element 4', for example an upper cabinet for a kitchen or similar room, or a bottom finish element 4''.

As can be gleaned from the above description and the figures, all the finish elements are preferably secured removably by means of attachment elements 51 and therefore without the use of permanent attachment elements such as screws or nails or glue which, if removed, would compromise the integrity of the finish element or the modular unit and, in any event, would require more time or assembly/disassembly.

The subject matter of the present invention is also a box-like module 100, 101 for a piece of furniture such as that shown in figures 1, and 1b.

The box-like module 100, 101 comprises a modular unit 1, described in the preceding sections, and at least one finish element 4 to which are secured attachment elements 51 inserted into one or more attachment openings 211, 221 and/or into one or more auxiliary attachment openings 231 of the modular unit 1.

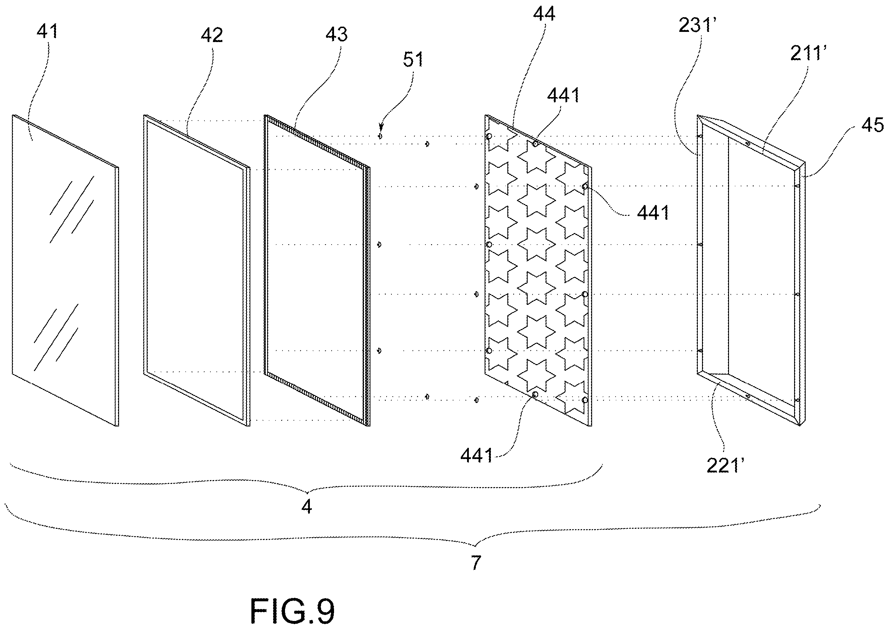

The finish element 4, which is also part of the subject matter of the present invention, is shown, for example, in its embodiment variants in figures 9 to 12. Bear in mind that in these figures the finish element 4 and a door 7, made by joining the finish element 4 to a finish holding frame 45, are shown simultaneously. Consequently, the finish element 4 when coupled to the finish holding frame 45 forms a door, whereas when it is coupled to a modular unit 1, it serves as a finish element of the modular unit, thus constituting a box-like module 100, 101.

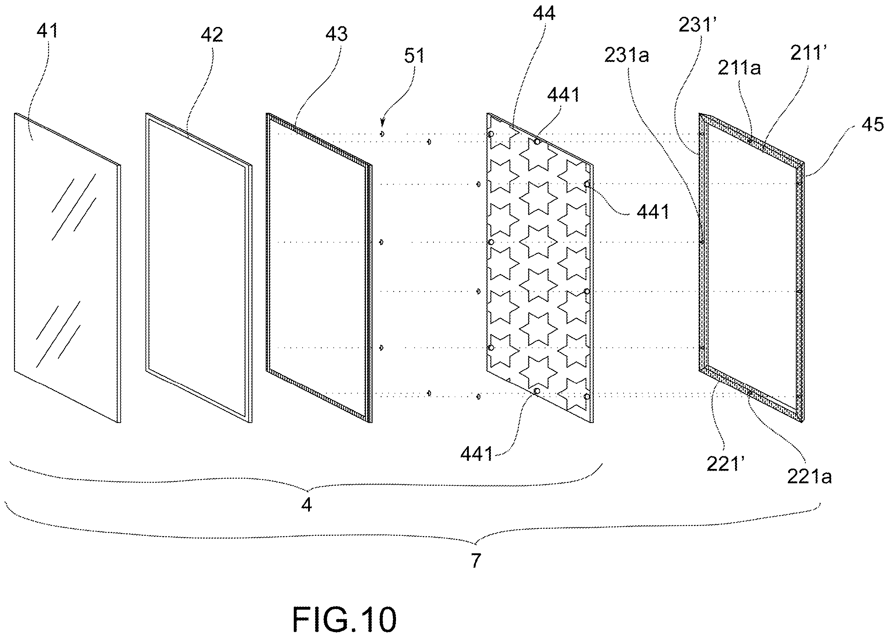

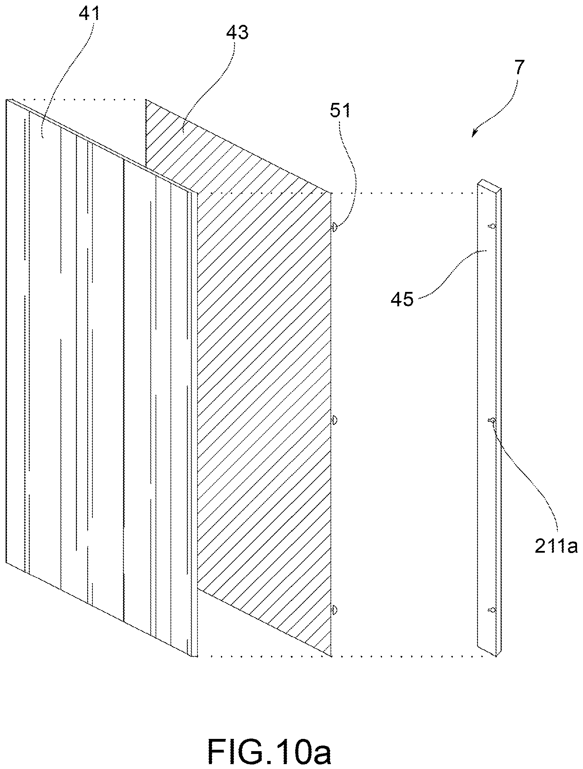

According to one aspect of the present invention, with specific reference, for example, to figures 9 and 10, the finish element 4 comprises an outer panel 41 made of transparent or translucent material, and a printed sheet 44 comprising a portrayal or decoration. The printed sheet 44 may be stably secured between the outer panel 41 and the blocking wall 211, 221 and/or the auxiliary blocking wall 231. In addition, one or more attachment elements 51, such as pins or screws which may be inserted into the attachment openings 211, 221 and/or the auxiliary attachment openings 231, are secured to the outer panel 41.

Preferably, the printed sheet 44 comprises fastening openings 441 through which the attachment elements 51 may pass.

Preferably, the printed sheet 44 is removably held between the outer panel 41 and the blocking wall 211, 221 without any additional means of permanent attachment, such as glue or screws, but rather is held only by being sandwiched between the outer panel 41 and the blocking wall 211, 221 and/or the auxiliary blocking wall 231, and possibly supported by the attachment elements 51.

According to an advantageous embodiment, the outer panel 41 comprises a holding frame 43 connected to the outer panel 41, preferably by means of a glue layer 42. In this variant, the one or more attachment elements 51 are secured to the holding frame 43 and the printed sheet 44 is secured to the holding frame 43 by means of the one or more attachment elements 51. This gives adequate strength to the finish element 4 while at the same time ensuring interchangeability of the printed sheet.

It is clear that in the present description, a decoration or portrayal is understood as any figurative element or even a simple solid color or pattern.

According to an advantageous embodiment, a lighting element (not shown), such as an LED strip, is housed on the holding frame 43 in the space between the printed sheet 44 and the outer panel 41, or on the finish holding frame 45, to provide backlighting to the outer panel 41.

According to an embodiment variant, the lighting element is housed behind the blocking wall 210', 220'; 310' and/or behind the auxiliary blocking wall 230', that is, on the side of the blocking wall or the auxiliary blocking wall facing the outer panel face 20".

Preferably, the finish element 4 has a thickness equal to or less than twenty-five millimeters, even more preferably equal to or less than eight millimeters, or equal to or less than five millimeters.

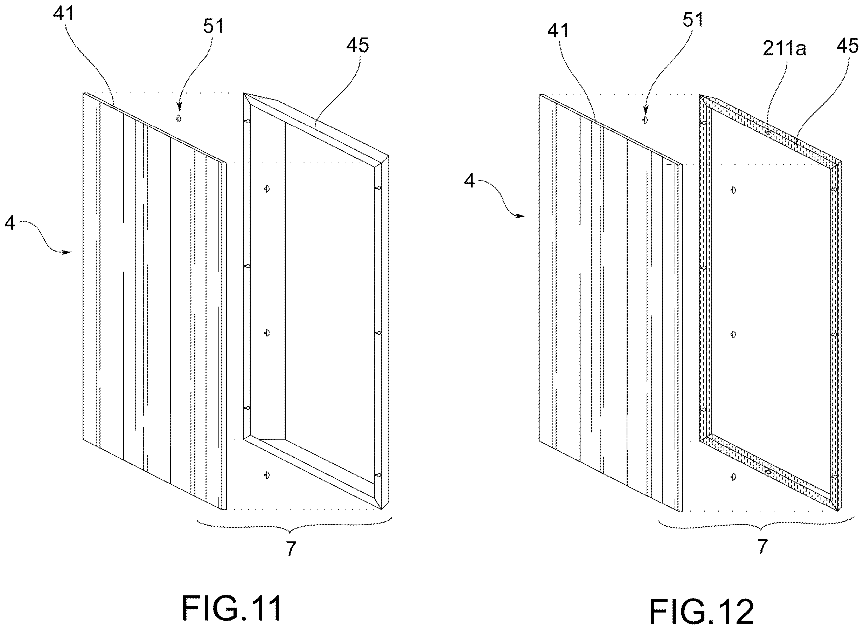

According to another aspect of the present invention, such as that shown in figures 11 and 12, the finish element 4 comprises an outer panel 41 directly comprising a portrayal or decoration. One or more attachment elements 51, such as pins or screws, are attached to said outer panel 41 for removably securing to the blocking wall 211, 221 and/or the auxiliary blocking wall 231. In this variant, the outer panel 41 has a thickness equal to or less than twenty-five millimeters or more preferably equal to or less than eight millimeters, even more preferably equal to or less than five millimeters.

Preferably, the finish element 4 is made of stone or metal or stoneware, or medium-density fiber (MDF), or polyvinylchloride (PVC), or polyethylene or polyethylene terephthalate (PET), or glass, or HPL (High Pressure Laminate), or polycarbonate.

The subject matter of the present invention also includes a door 7 for a piece of furniture, preferably one that may be rotatably secured to a modular unit 1 or to a generic piece of furniture.

It is clear that the door 7 of the present invention is preferably capable of being secured to a piece of furniture or a modular unit 1 described in the present document, but it is also clear that the door 7 may be secured to any piece of furniture of the prior art, made for example with wooden modules, for example by means of appropriate hinges. Consequently, the door 7 of the present invention is not to be considered strictly required to connect to a modular unit 1 described in this document. The door 7 comprises a finish element 4 according to the variants described earlier and a finish holding frame 45 preferably made of thin sheet metal or an aluminum section or a plastic material or fiberglass or carbon fiber. Said finish holding frame 45 comprises a finish blocking wall 211', 221' and/or an auxiliary finish blocking wall 231'. One or more attachment elements 51 for attaching the outer panel 41 removably secure the outer panel 41 to the finish blocking wall 211', 221' and/or to the auxiliary finish blocking wall 231'.

In the variant in which the finish element 4 comprises the printed sheet 44, said printed sheet 44 may be secured between the outer panel 41 and the finish blocking wall 211', 221' and/or the auxiliary finish blocking wall 231', preferably with the attachment elements 51 passing therethrough, which make it possible to hold it in position and prevent slipping.

It is clear that, similarly to the modular unit 1, at least one elastic element 6 capable of undergoing an elastic deformation and securing one or more attachment elements 51, such as a pin or a screw 5, by "snap" connection is positioned behind the finish blocking wall 211', 221' and/or the auxiliary finish blocking wall 231' in the vicinity of one or more finish attachment elements 211a, 221a or auxiliary finish attachment openings 231a. This occurs in such a way that translation of the screw or pin 5 in a direction K perpendicular to the insertion direction of the screw/pin into the finish attachment openings or auxiliary finish attachment openings is prevented.

Preferably, the features of the blocking walls 210', 220'; 310' and of the auxiliary blocking walls, as well as of the attachment openings 211, 221, 311 and of the auxiliary attachment openings and their interactions with the attachment elements 51, are therefore to be considered included and valid on an equal basis in the finish blocking wall 211', 221', in the auxiliary finish blocking wall 231', and in the finish attachment openings 211a, 221a, or auxiliary finish attachment openings 231a. This ensures full compatibility and interchangeability between the finish elements 4 usable on the right, left, bottom, and back panels of the modular unit, as well as on the finish holding frame 45 for the door 7.

Preferably, the door 7 comprises a release button (not shown) for enabling or disabling the elastic element 6, i.e. for interfering mechanically therewith, in order to release the outer panel 41.

It is also clear that for a person skilled in the art, the term "holding frame" refers to any frame or a simple section or a more complex metal structure.

For example, according to an advantageous embodiment, such as that shown in figure 10a, the finish holding frame 45 is merely a metal bar, preferably made of aluminum, extending preferably in the first direction X without additional support elements, i.e. it is not shaped, for example, like a frame, as shown for example in the other embodiment variants. In this variant, preferably, the holding frame 43 joined to the outer panel 41, preferably by means of a glue layer 42, is a thin piece of sheet metal in the form of a frame or in the form of an entire thin piece of sheet metal. In addition, in this variant, one or more attachment elements 51 are preferably secured to the piece of thin sheet metal, for example by welding or press fitting or gluing. This makes it possible to make a furniture door that is light, extremely thin, and strong with all the advantages provided by the finish element. It is clear that all the previously described variants of the outer panel 41 and the printed sheet 44 apply to this variant of the holding frame 43 and the finish holding frame 45; in addition, all the variants of the finish element 4 described in this description apply, with the difference that the holding frame 43 is a thin piece of sheet metal in the form of a frame or in the form of an entire piece of thin sheet metal.

Preferably, the finish holding frame 45 completely houses or directly supports (i.e. is fastened) one or more hinges for movement of the door 7.

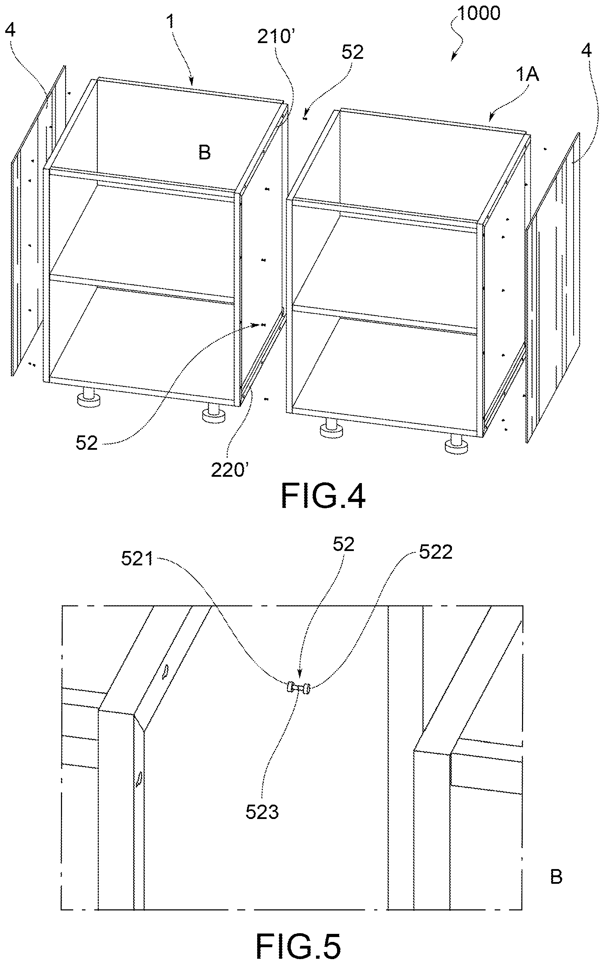

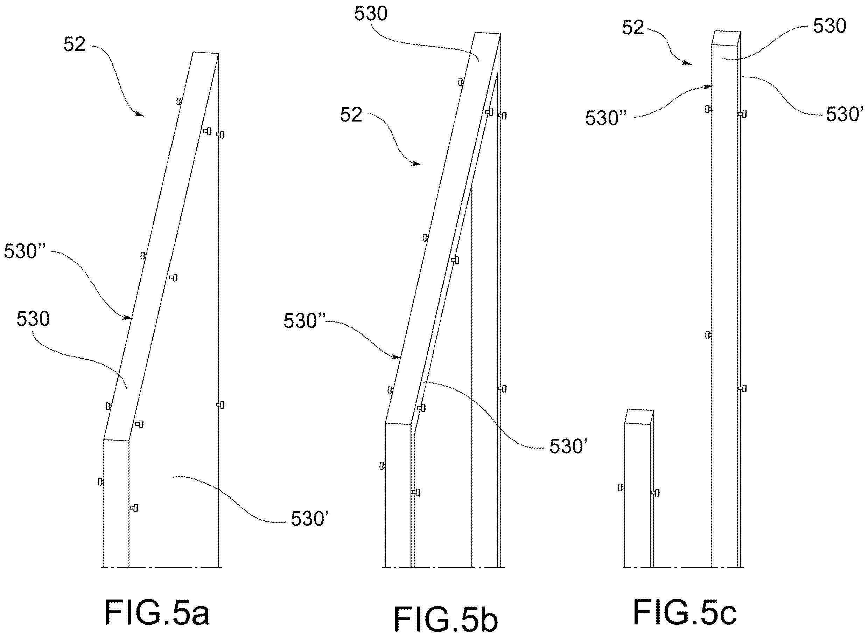

Furthermore, the subject matter of the present invention is a piece of furniture 1000, such as that shown in figure 4, comprising at least two modular units 1, 1A described in the preceding sections, connected together by means of module attachment elements 52 inserted into one or more attachment openings 211, 221 and/or into one or more auxiliary attachment openings 231 of each modular unit 1, 1A. The module attachment elements are preferably double-headed pins or pegs such as those shown, for example, in figure 5. In other words, pins or pegs comprise a left head 521 and a right head 522 connected to each other by a central connection element 523 with a reduced section compared to the cross-section of the head. The left head 521 is capable of being inserted into the attachment openings 211, 221 and/or the auxiliary attachment openings 231 of one 1 of the two modular units 1, 1A, whereas the right head 522 is capable of being inserted into the attachment openings 211, 221 and/or the auxiliary attachment openings 231 of the other modular unit 1A of the two modular units 1, 1A, adjacent to the first. In this way the modules are joined together quickly, simply, and effectively without the need to provide for burdensome attachment operations using screws, which would furthermore damage the modular units.

According to an embodiment variant, such as that shown in figures 5a to 5c, the module attachment elements 52 comprise an attachment frame 530 comprising a right frame surface 530' and a left frame surface 530" opposite each other. One or more pins or pegs, preferably with a broadened head and capable of being inserted into the attachment openings 211, 221 and/or auxiliary attachment openings 231 of one 1 of the two modular units 1, 1A, are attached or made in each right frame surface 530' and left frame surface 530". In particular, when the attachment frame 530 is installed between two modular units 1, 1A, the pins or pegs secured to the right frame surface 530' are inserted into the attachment openings 211, 221 and/or the auxiliary attachment openings 231 of one of the two modular units 1, 1A, whereas the pins or pegs secured to the left frame surface 530" are inserted into the attachment openings 211, 221 and/or auxiliary attachment openings 231 of the other of the two modular units 1, 1A. In this way the modules are joined together quickly, simply, and effectively without the need to provide for burdensome attachment operations using screws, and at the same time it is possible to eliminate any possible need for filler between the modules, thus ensuring greater flexibility in design and filling of the spaces where the piece of furniture is located.

In addition, the subject matter of the present invention also refers to a method for making a modular unit 1 described earlier.

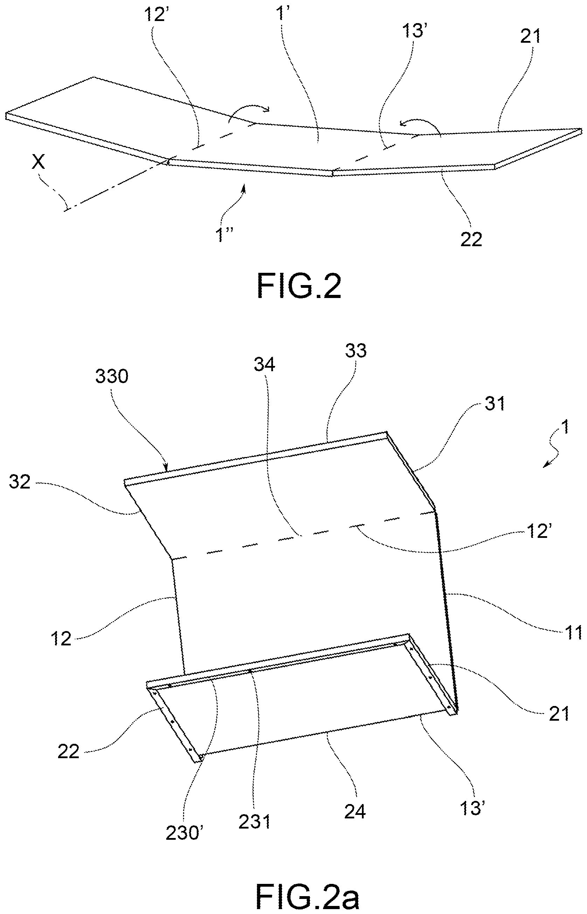

The aforementioned method is clearer to understand in reference to figures 2 and 2a, and comprises the following operative steps:
- providing a piece of sheet metal 1', preferably with weakening lines 12', 13' running along the first direction X, comprising an upper edge 21 and a lower edge 22, wherein in the vicinity of said lower edge 22 and upper edge 21, said sheet metal 1' comprises a fold 210, 220 of the sheet metal comprising a blocking wall 210', 220'; 310' lying along the first direction X to a much lesser degree compared to the extent of the entire sheet metal 1' along the same first direction X and at a distance from an outside sheet metal surface 1";
- folding the sheet metal 1', preferably along the weakening lines 12', 13', in order to obtain the modular unit 1 so that the back panel 10 is between the right panel 20 and the left panel 30 and, preferably, between two weakening lines 12', 13'.

It is clear that if weakening lines, such as incisions, indentations, perforations, microperforations, or similar items, are present in the sheet metal, folding of the sheet metal at the installation location is facilitated. If such weakening lines are absent, however, it is preferable to make the fold or at least a partial fold of the sheet metal at the factory before shipping to the intended installation location.

It is clear that the aforementioned method is for an embodiment variant in which the modular unit 1 is made from a piece of sheet metal 1' as a single part.

Furthermore, after making the modular unit 1, the method comprises the step of attaching one or more finish elements 4 to the modular unit by inserting attachment elements 51 into one or more attachment openings 211, 221 or auxiliary attachment openings 231, so as to make a box-like module.

Innovatively, the present invention overcomes the drawbacks of the modular units of the prior art.

In particular, the presence of a piece of folded sheet metal provided with attachment openings allows for simple and effective coupling between a modular unit and a finish element, as well as between adjacent modular units or between a finish element and a holding frame for making the door.

This moreover makes it possible to proceed with a rapid installation of an entire piece of furniture without the need for burdensome attachment operations using different sizes of screws and dowels.

What's more, thanks to the possibility of easily repositioning the finish elements on the modular unit, it is possible to simultaneously change the exterior finish and the type of decoration of the furniture, with the possibility of obtaining various shapes and different colors.

Furthermore and advantageously, the possibility of only changing the printed sheet of the finish element makes it possible to modify at will the esthetic appearance of the furniture over time, without having to change an entire finish side or the entire piece of furniture. In addition, the same advantage also applies to the door.

Advantageously, making the modular unit out of thin sheet metal allows for easy and agile transport as well as easy assembly, as the modular unit is extremely light compared to wooden modular units of the prior art.

What's more, the modular unit variant made with sheet metal as a single part folded along weakening lines further facilitates the storage and shipping operations of the modular units. Indeed, the pieces of folded sheet metal may be easily stacked and stored in extremely small spaces compared to a preassembled box-like modular unit typical of the prior art. Similarly, it is also possible to collect and assemble numerous panels for making a piece of furniture.

The installer of the modular unit according to the present invention will merely have to transport the unfolded pieces of sheet metal to the module installation location and proceed, on location, to fold along the weakening lines on the sheet metal in order to make the box-like module.

Consequently, in an extremely innovative way the modular unit makes it possible to redesign and personalize manufactured goods according to the particular end purpose, without having to make custom parts or decorations, and allowing the space of the room to be occupied in a simple and optimal way. The extreme modularity and interchangeability of the finish elements, together with a light and thin structure without conventional screws, is unique in the field.

In addition, it is possible at any time to rearrange the layout of the printed sheets without decorating or gluing operations, or without markings or holes remaining in the panels.

In addition, it is possible to make multi-colored modular units, variable at will, in the same furniture. In particular, it is possible for the same box-like module to have surfaces with different colors and/or materials.

It is clear that each finish element 4 or door 7 may also only partially or totally cover the holding frame or the right panel 20, left panel 30, or back panel 10. This allows for variability in decoration, including on the same door or on the same side of the box-like module.

Furthermore, in a particularly advantageous way, the modular unit according to the present invention is eco-compatible, not flammable, and not sensitive to water, as it is entirely made of sheet metal. In particular, being made of sheet metal, such as steel, it is 100% recyclable as well as strong, durable, easily washable, and quick to clean.

Advantageously, the possibility of making finish elements of limited thickness, such as with dimensions of less than 8 millimeters, makes it easy to transport the panels and therefore easy to distribute them.

## Claims

1. A modular unit (1) for forming a box-like module (100, 101) for a piece of furniture, such as a modular kitchen, said modular unit (1) comprising:
a bottom panel (10), a right panel (20), and a left panel (30), made of a thin metal sheet and coupled to one another to define an open box-shaped inner cavity (I), each of said right panel (20) and left panel (30) comprising an inner panel face (20', 30'), facing the inner cavity (I), and an outer panel face (20"), not facing the inner cavity (I) and extending mainly according to a first extension direction (X) and a second extension direction (Y) perpendicular to the first extension direction (X) and extending much less in a third extension direction (Z) perpendicular to the first (X) and to the second (Y) extension directions, i.e. being of a small thickness in the third extension direction (Z),
wherein each of said right (20) and left (30) panels comprises at least one upper panel edge (21, 31) and a lower panel edge (22, 32) which delimit the extension of the panel along the first extension direction (X),
wherein close to said upper edge (21, 31) and lower edge (22, 32), each panel comprises a fold (210, 220) of the metal sheet comprising a blocking wall (210', 220'; 310') extending along the first extension direction (X) much less than the extension of the entire panel along the same first extension direction (X) and being spaced apart from the outer panel face (20''),
fixing openings (211, 221) being obtained on said blocking wall (210', 220'; 310') for removably fixing a finishing element (4) or an equal modular unit (1);
**characterized in that** the bottom panel (10), the right panel (20), and the left panel (30) are made in a single piece and obtained by folding a single metal sheet (1') along weakenings (12', 13') of the metal sheet (1').

2. Modular unit (1) according to claim 1, wherein each of said right (20) and left (30) panels comprises at least one left panel edge (23, 33) and a right panel edge (24, 34) which delimit the extension of the panel along the second extension direction (Y),
wherein close to at least said left edge (23, 33), each panel comprises an auxiliary fold (230, 330) of the metal sheet comprising an auxiliary blocking wall (230', 330') extending along the second extension direction (Y) much less than the extension of the entire panel along the same second extension direction (Y) and being spaced apart from the outer panel face (20"),
auxiliary fixing openings (231) being obtained on said auxiliary blocking wall (230', 330') for removably fixing a finishing element (4) or an equal modular unit (1).

3. Modular unit (1) according to any one of the preceding claims, wherein the fixing openings (211, 221) and the auxiliary fixing openings (231) are eyelets comprising a reduced section region (222) as compared to a normal section region (223) to allow a head of a screw or nail (5) to pass from the normal section region (223) and prevent the screw or nail (5) from exiting the reduced section region (222).

4. Modular unit (1) according to claim 3, wherein behind the blocking wall (210', 220'; 310') and/or behind the auxiliary blocking wall (230'), i.e. on the side of the blocking wall facing the outer panel face (20''), close to one or more of the fixing openings (211, 221) or auxiliary fixing openings (231), at least one elastic element (6) is positioned, suitable for undergoing an elastic deformation and snap-fixing the screw or nail (5) so that the translation of the screw or nail (5) is prevented along a direction (K) perpendicular to the insertion direction of the screw into the fixing openings or auxiliary fixing openings, said insertion direction being substantially parallel to the third extension direction (Z).

5. Modular unit (1) according to claim 4, wherein the elastic element (6) comprises an elastic element eyelet having a reduced section region (222') compared to a normal section region (223') to allow a head of a screw or nail (5) to pass from the normal section region (223') and prevent the screw or nail (5) from exiting the reduced section region (222').

6. Modular unit (1) according to any one of the preceding claims, wherein the right panel (20) and/or the left panel (30) and/or the bottom panel (10), close to the upper panel edge (21, 31) or the lower panel edge (22, 32), comprises a horizontal locking wall (115, 215, 315, 225), which extends on a plane parallel to the third extension direction (Z) and optionally perpendicular only to the first extension direction (X), fixing openings (215', 315') being obtained on said horizontal locking wall (115, 215, 315,225) for removably fixing a finishing element (4) or an equal modular unit (1).

7. Modular unit (1) according to any one of the preceding claims, comprising a door rotatably anchorable to the modular unit (1), comprising an outer panel (41) made of a transparent or translucent material,
a printed sheet (44), comprising a depiction or decoration,
a finishing support frame (45) made of a thin metal sheet or aluminum section bar or plastic material or glass fiber or carbon fiber and comprising a finishing locking wall (211', 221') and/or an auxiliary finishing locking wall (231'), one or more fixing elements (51), such as nails or screws, being fixed on said outer panel (41), which fixing elements removably fix the outer panel (41) to the finishing locking wall (211', 221') and/or to the auxiliary locking wall (231'),
said printed sheet (44) being anchored between the outer panel (41) and the finishing locking wall (211', 221') and/or the auxiliary locking wall (231').

8. Modular unit (1) according to any one of the claims 1 to 6, comprising a door rotatably anchorable to the modular unit (1), comprising an outer panel (41) comprising a depiction or decoration,
a finishing support frame (45) made of a thin metal sheet or aluminum section bar or plastic material or glass fiber or carbon fiber, said finishing support frame (45) comprising a finishing locking wall (211', 221') and/or an auxiliary finishing locking wall (231'), one or more fixing elements (51), such as nails or screws, being fixed on said outer panel (41), which fixing elements removably fix the outer panel (41) to the finishing locking wall (211', 221') and/or to the auxiliary locking wall (231'),
said outer panel (41) having a thickness which is less than or equal to twenty-five millimeters, preferably less than or equal to eight millimeters.

9. A box-like module (100, 101) for a piece of furniture, such as a modular kitchen, comprising a modular unit (1) according to any one of claims 1 to 8 and at least one finishing element (4) onto which fixing elements (51) inserted into one or more fixing openings (211, 221) or auxiliary fixing openings (231) are anchored.

10. A box-like module (100, 101) according to claim 9, wherein the finishing element comprises an outer panel (41) made of a transparent or translucent material and a printed sheet (44), comprising a depiction or decoration, said printed sheet (44) being stably anchorable between the outer panel (41) and the blocking wall (210', 220'; 310') and/or the auxiliary blocking wall (230', 330'), one or more fixing elements (51), such as nails or screws, being fixed on said outer panel (41) to be anchored removably to the blocking wall (210', 220'; 310') and/or to the auxiliary blocking wall (230', 330').

11. A box-like module (100, 101) according to claim 10, wherein the printed sheet (44) comprises anchoring openings (441) suitable for being crossed by the fixing elements (51).

12. A box-like module (100, 101) according to claim 10 or 11, wherein the outer panel (41) comprises a support frame (43) joined to the outer panel (41), preferably by means of an adhesive layer (42), and wherein the one or more fixing elements (51) are fixed to the support frame (43), and wherein the printed sheet (44) is anchored to the support frame (43) by means of the one or more fixing elements (51).

13. A box-like module (100, 101) according to claim 12, wherein a lighting element, such as a LED strip, is accommodated on the support frame (43), in the gap between the printed sheet (44) and the outer panel (41).

14. A box-like module (100, 101) according to claim 9, wherein the finishing element comprises an outer panel (41) comprising a depiction or decoration, one or more fixing elements (51), such as nails or screws, being fixed on said outer panel (41) to be anchored removably to the blocking wall (210', 220'; 310') and/or to the auxiliary blocking wall (230', 330'),
said outer panel (41) having a thickness which is less than or equal to twenty-five millimeters, preferably less than or equal to eight millimeters.

15. A box-like module (100, 101) according to claim 14, wherein the finishing element is made of stone, or metal or stoneware, or MDF, or PVC, or PET, or glass.

16. A piece of furniture (1000), comprising at least two modular units (1) according to any one of claims 1 to 8, joined to each other by means of module fixing elements (52) inserted into one or more of the fixing openings (211, 221) and/or auxiliary fixing openings (231) of each of said at least two modular units (1).

17. A method for manufacturing a modular unit (1) according to any one of claims 1 to 8, comprising the steps of:
- providing a metal sheet (1') provided with weakenings (12', 13') which extend along the first extension direction (X) and comprising an upper edge (21) and a lower edge (22), wherein close to said lower (22) and upper edges (21), said metal sheet (1') comprises a fold (210, 220) of the metal sheet comprising a blocking wall (210', 220'; 310') extending along the first extension direction (X) much less than the extension of the entire metal sheet (1') along the same first extension direction (X) and being spaced apart from an outer metal sheet face (1");
- folding the metal sheet (1') along the weakenings (12', 13') to obtain the modular unit (1) so that at least the bottom panel (10) is between two weakenings (12', 13').

## Patentansprüche

1. Modulare Einheit (1) zum Bilden eines kastenförmigen bzw. kastenartigen Moduls (100, 101) für ein Möbelstück, wie eine modulare Küche, wobei die modulare Einheit (1) umfasst:
eine Bodenplatte (10), eine rechte Platte (20) und eine linke Platte (30), die aus einem dünnen Metallblech bestehen und miteinander gekoppelt sind, um einen offenen kastenförmigen inneren Hohlraum (I) zu definieren, wobei jede der rechten Platte (20) und der linken Platte (30) eine innere Plattenfläche (20', 30'), die dem inneren Hohlraum (I) zugewandt ist, und eine äußere Plattenfläche (20") umfasst, die nicht dem inneren Hohlraum (I) zugewandt ist und sich hauptsächlich gemäß einer ersten Erstreckungsrichtung (X) und einer zweiten Erstreckungsrichtung (Y) senkrecht zu der ersten Erstreckungsrichtung (X) erstreckt, und sich viel weniger in einer dritten Erstreckungsrichtung (Z) senkrecht zu der ersten (X) und zu der zweiten (Y) Erstreckungsrichtung erstreckt, d. h. eine geringe Dicke in der dritten Erstreckungsrichtung (Z) aufweist,
wobei jede der rechten (20) und der linken (30) Platte zumindest eine(n) obere(n) Plattenkante bzw. -rand (21, 31) und eine(n) untere(n) Plattenkante bzw. -rand (22, 32) umfasst, welche die Erstreckung der Platte entlang der ersten Erstreckungsrichtung (X) begrenzen,
wobei nahe der oberen Kante (21, 31) und der unteren Kante (22, 32) jede Platte einen Falz (210, 220) des Metallblechs umfasst, der eine Blockierwand (210', 220'; 310') umfasst, die sich viel weniger entlang der ersten Erstreckungsrichtung (X) als die Erstreckung der gesamten Platte entlang derselben ersten Erstreckungsrichtung (X) erstreckt und von der äußeren Plattenfläche (20") beabstandet ist,
Fixier- bzw. Befestigungsöffnungen (211, 221), die an der Blockierwand (210', 220'; 310') zum abnehmbaren Fixieren bzw. Befestigen eines Abschlusselements (4) oder einer gleichen modularen Einheit (1) vorhanden sind;
**dadurch gekennzeichnet, dass** die Bodenplatte (10), die rechte Platte (20) und die linke Platte (30) aus einem einzelnen bzw. einzigen Stück bestehen und
durch Falten eines einzelnen bzw. einzigen Metallblechs (1') entlang von Schwachstellen (12', 13') des Metallblechs (1') erhalten werden.

2. Modulare Einheit (1) nach Anspruch 1, wobei jede der rechten (20) und der linken (30) Platte zumindest eine(n) linke(n) Plattenkante bzw. -rand (23, 33) und eine(n) rechte(n) Plattenkante bzw. -rand (24, 34) umfasst, welche die Erstreckung der Platte entlang der zweiten Erstreckungsrichtung (Y) begrenzen,
wobei nahe zumindest der linken Kante (23, 33) jede Platte einen Hilfsfalz (230, 330) des Metallblechs umfasst, der eine Hilfsblockierwand (230', 330') umfasst, die sich viel weniger entlang der zweiten Erstreckungsrichtung (Y) als die Erstreckung der gesamten Platte entlang derselben zweiten Erstreckungsrichtung (Y) erstreckt und von der äußeren Plattenfläche (20") beabstandet ist,
wobei an der Hilfsblockierwand (230', 330') Hilfsfixier- bzw. - befestigungsöffnungen (231) zum entfernbaren Fixieren bzw. Befestigen eines Abschlusselements (4) oder einer gleichen modularen Einheit (1) vorhanden sind.

3. Modulare Einheit (1) nach einem der vorhergehenden Ansprüche, wobei die Befestigungsöffnungen (211, 221) und die Hilfsfixier- bzw. - befestigungsöffnungen (231) Ösen sind, die einen Bereich mit reduziertem Querschnitt (222) verglichen mit einem Bereich mit normalem Querschnitt (223) aufweisen, um dem Kopf einer Schraube oder eines Nagels (5) zu ermöglichen, aus dem Bereich mit normalem Querschnitt (223) zu passieren und zu verhindern, dass die Schraube oder der Nagel (5) aus dem Bereich mit reduziertem Querschnitt (222) austritt.

4. Modulare Einheit (1) nach Anspruch 3, wobei hinter der Blockierwand (210', 220'; 310') und/oder hinter der Hilfsblockierwand (230'), d. h. auf der Seite der Blockierwand, die der äußeren Plattenfläche (20") zugewandt ist, nahe einer oder mehrerer der Befestigungsöffnungen (211, 221) oder Hilfsbefestigungsöffnungen (231), zumindest ein elastisches Element (6) positioniert ist, das geeignet ist, eine elastische Verformung zu erfahren und die Schraube oder den Nagel (5) durch Schnappen zu fixieren bzw. zu befestigen, so dass die Verschiebung der Schraube oder des Nagels (5) entlang einer Richtung (K) senkrecht zu der Einsetzrichtung der Schraube in die Befestigungsöffnungen oder Hilfsbefestigungsöffnungen verhindert wird, wobei die Einsetzrichtung im Wesentlichen parallel zu der dritten Erstreckungsrichtung (Z) ist.

5. Modulare Einheit (1) nach Anspruch 4, wobei das elastische Element (6) eine Elastisches-Element-Öse umfasst, die einen Bereich mit reduziertem Querschnitt (222') verglichen mit einem Bereich mit normalem Querschnitt (223') aufweist, um einem Kopf einer Schraube oder eines Nagels (5) zu ermöglichen, aus dem Bereich mit normalem Querschnitt (223') zu passieren und zu verhindern, dass die Schraube oder der Nagel (5) aus dem Bereich mit reduziertem Querschnitt (222') austritt.

6. Modulare Einheit (1) nach einem der vorhergehenden Ansprüche, wobei die rechte Platte (20) und/oder die linke Platte (30) und/oder die Bodenplatte (10) nahe der oberen Plattenkante (21, 31) oder der unteren Plattenkante (22, 32) eine horizontale Verriegelungswand (115, 215, 315, 225) umfasst bzw. umfassen, die sich auf einer Ebene parallel zu der dritten Erstreckungsrichtung (Z) und optional nur senkrecht zu der ersten Erstreckungsrichtung (X) erstreckt, wobei an der horizontalen Verriegelungswand (115, 215, 315, 225) Fixier- bzw. Befestigungsöffnungen (215', 315') zum entfernbaren Fixieren bzw. Befestigen eines Abschlusselements (4) oder einer gleichen modularen Einheit (1) vorhanden sind.

7. Modulare Einheit (1) nach einem der vorhergehenden Ansprüche, umfassend eine Tür, die drehbar an der modularen Einheit (1) verankerbar ist, umfassend eine Außenplatte (41) aus einem transparenten oder durchscheinenden Material,
eine(n) bedruckte(n) Bogen bzw. Lage (44), der bzw. die eine Abbildung oder ein Dekor umfasst,
einen Abschlussstütz- bzw. -trägerrahmen (45), der aus einem dünnen Metallblech oder Aluminiumprofilstab oder Kunststoffmaterial oder Glasfaser oder Kohlefaser besteht und eine Abschlussverriegelungswand (211', 221') und/oder eine Hilfsabschlussverriegelungswand (231') umfasst, wobei ein oder mehrere Fixier- bzw. Befestigungselemente (51), wie Nägel oder Schrauben, an der Außenplatte (41) fixiert bzw. befestigt sind, wobei die Befestigungselemente die Außenplatte (41) lösbar an der Abschlussverriegelungswand (211', 221') und/oder an der Hilfsverriegelungswand (231') fixieren bzw. befestigen,
wobei der bedruckte Bogen (44) zwischen der Außenplatte (41) und der Abschlussverriegelungswand (211', 221') und/oder der Hilfsverriegelungswand (231') verankert ist.

8. Modulare Einheit (1) nach einem der Ansprüche 1 bis 6, umfassend eine Tür, die drehbar an der modularen Einheit (1) verankerbar ist, umfassend eine Außenplatte (41), die eine Abbildung oder ein Dekor umfasst,
einen Abschlussstütz- bzw. -trägerrahmen (45), der aus einem dünnen Metallblech oder Aluminiumprofilstab oder Kunststoffmaterial oder Glasfaser oder Kohlefaser besteht, wobei der Abschlussträgerrahmen (45) eine Abschlussverriegelungswand (211', 221') und/oder eine Hilfsabschlussverriegelungswand (231') umfasst, wobei ein oder mehrere Fixier- bzw. Befestigungselemente (51), wie Nägel oder Schrauben, an der Außenplatte (41) fixiert bzw. befestigt sind, wobei die Befestigungselemente die Außenplatte (41) lösbar an der Abschlussverriegelungswand (211', 221') und/oder an der Hilfsverriegelungswand (231') fixieren bzw. befestigen,
wobei die Außenplatte (41) eine Dicke aufweist, die kleiner oder gleich fünfundzwanzig Millimeter, vorzugsweise kleiner oder gleich acht Millimeter ist.

9. Kastenförmiges Modul (100, 101) für ein Möbelstück, wie eine modulare Küche, umfassend eine modulare Einheit (1) nach einem der Ansprüche 1 bis 8 und zumindest ein Abschlusselement (4), an dem Fixier- bzw. Befestigungselemente (51), die in eine oder mehrere Fixier- bzw. Befestigungsöffnungen (211, 221) oder Hilfsfixier- bzw. -befestigungsöffnungen (231) eingesetzt sind, verankert sind.

10. Kastenförmiges Modul (100, 101) nach Anspruch 9, wobei das Abschlusselement eine Außenplatte (41) aus transparentem oder durchscheinendem Material und eine(n) bedruckte(n) Bogen bzw. Lage (44) umfasst, der bzw. die eine Abbildung oder ein Dekor umfasst, wobei der bedruckte Bogen (44) stabil zwischen der Außenplatte (41) und der Blockierwand (210', 220'; 310') und/oder der Hilfsblockierwand (230', 330') verankerbar ist, wobei ein oder mehrere Fixier- bzw. Befestigungselemente (51), wie Nägel oder Schrauben, an der Außenplatte (41) befestigt sind, um lösbar an der Blockierwand (210', 220'; 310') und/oder an der Hilfsblockierwand (230', 330') verankert zu sein.

11. Kastenförmiges Modul (100, 101) nach Anspruch 10, wobei der bedruckte Bogen (44) Verankerungsöffnungen (441) umfasst, die geeignet sind, von den Befestigungselementen (51) durchquert zu werden.

12. Kastenförmiges Modul (100, 101) nach Anspruch 10 oder 11, wobei die Außenplatte (41) einen Stütz- bzw. Trägerrahmen (43) umfasst, der vorzugsweise mittels einer Haftschicht (42) mit der Außenplatte (41) verbunden ist, und wobei das eine oder die mehreren Befestigungselemente (51) an dem Stützrahmen (43) befestigt sind, und wobei der bedruckte Bogen (44) mittels des einen oder der mehreren Befestigungselemente (51) an dem Stützrahmen (43) verankert ist.

13. Kastenförmiges Modul (100, 101) nach Anspruch 12, wobei ein Beleuchtungselement, wie ein LED-Streifen, an bzw. auf dem Stützrahmen (43) in dem Spalt zwischen dem bedruckten Bogen (44) und der Außenplatte (41) untergebracht ist.

14. Kastenförmiges Modul (100, 101) nach Anspruch 9, wobei das Abschlusselement eine Außenplatte (41) umfasst, die eine Abbildung oder ein Dekor umfasst, wobei ein oder mehrere Fixier- bzw. Befestigungselemente (51), wie Nägel oder Schrauben, an der Außenplatte (41) fixiert bzw. befestigt sind, um lösbar an der Blockierwand (210', 220'; 310') und/oder an der Hilfsblockierwand (230', 330') verankert zu sein, wobei die Außenplatte (41) eine Dicke aufweist, die kleiner oder gleich fünfundzwanzig Millimeter, vorzugsweise kleiner oder gleich acht Millimeter ist.

15. Kastenförmiges Modul (100, 101) nach Anspruch 14, wobei das Abschlusselement aus Stein, Metall, Steingut, MDF, PVC, PET oder Glas besteht.

16. Möbelstück (1000), umfassend zumindest zwei modulare Einheiten (1) nach einem der Ansprüche 1 bis 8, die mittels Modulfixier- bzw. - befestigungselementen (52) miteinander verbunden sind, die in eine oder mehrere der Fixier- bzw. Befestigungsöffnungen (211, 221) und/oder Hilfsfixier- bzw. -befestigungsöffnungen (231) jeder der zumindest zwei modularen Einheiten (1) eingesetzt sind.

17. Verfahren zum Herstellen einer modularen Einheit (1) nach einem der Ansprüche 1 bis 8, umfassend die Schritte:
- Bereitstellen eines Metallblechs (1'), das mit Schwachstellen (12', 13') versehen ist, die sich entlang der ersten Erstreckungsrichtung (X) erstrecken, und eine(n) obere(n) Kante bzw. Rand (21) und eine(n) untere(n) Kante bzw. Rand (22) umfasst, wobei nahe der unteren (22) und der oberen Kante (21) das Metallblech (1') einen Falz (210, 220) des Metallblechs umfasst, der eine Blockierwand (210', 220'; 310') umfasst, die sich viel weniger entlang der ersten Erstreckungsrichtung (X) erstreckt als die Erstreckung des gesamten Metallblechs (1') entlang derselben ersten Erstreckungsrichtung (X) und von einer äußeren Metallblechfläche (1") beabstandet ist;
- Falten des Metallblechs (1') entlang der Schwachstellen (12', 13'), um die modulare Einheit (1) zu erhalten, so dass sich zumindest die Bodenplatte (10) zwischen zwei Schwachstellen befindet (12', 13').

## Revendications

1. Unité modulaire (1) pour la formation d'un module de type boîte (100, 101) pour un article d'ameublement, tel qu'une cuisine modulaire, ladite unité modulaire (1) comprenant :
un panneau de dessous (10), un panneau droit (20), et un panneau gauche (30), constitués d'une tôle métallique fine et couplés les uns aux autres pour définir une cavité interne (I) en forme de boîte ouverte, chacun desdits panneau droit (20) et panneau gauche (30) comprenant une face de panneau interne (20', 30'), faisant face à la cavité interne (I), et une face de panneau externe (20''), ne faisant pas face à la cavité interne (I) et s'étendant principalement selon une première direction d'extension (X) et une deuxième direction d'extension (Y) perpendiculaire à la première direction d'extension (X) et s'étendant beaucoup moins dans une troisième direction d'extension (Z) perpendiculaire à la première (X) et à la deuxième direction d'extension (Y), c'est-à-dire qui est d'une faible épaisseur dans la troisième direction d'extension (Z),
dans laquelle chacun desdits panneaux droit (20) et gauche (30) comprend au moins un bord de panneau supérieur (21, 31) et un bord de panneau inférieur (22, 32) qui délimitent l'extension du panneau le long de la première direction d'extension (X),
dans laquelle, près desdits bord supérieur (21, 31) et bord inférieur (22, 32), chaque panneau comprend un pli (210, 220) de la tôle métallique comprenant une paroi de blocage (210', 220' ; 310') s'étendant le long de la première direction d'extension (X) beaucoup moins que l'extension de la totalité du panneau le long de la même première direction d'extension (X) et qui est espacée de la face externe de panneau (20''),
des ouvertures de fixation (211, 221) étant obtenues sur ladite paroi de blocage (210', 220' ; 310') pour la fixation, de manière amovible, d'un élément de finition (4) ou d'une unité modulaire (1) équivalente ;
**caractérisée en ce que** le panneau de dessous (10), le panneau droit (20) et le panneau gauche (30) sont réalisés d'un seul tenant et obtenus par le pliage d'une unique tôle métallique (1') le long d'affaiblissements (12', 13') de la tôle métallique (1').

2. Unité modulaire (1) selon la revendication 1, dans laquelle chacun desdits panneaux droit (20) et gauche (30) comprend au moins un bord de panneau gauche (23, 33) et un bord de panneau droit (24, 34) qui délimitent l'extension du panneau le long de la deuxième direction d'extension (Y),
dans laquelle, près d'au moins ledit bord gauche (23, 33), chaque panneau comprend un pli auxiliaire (230, 330) de la tôle métallique comprenant une paroi de blocage auxiliaire (230', 330') s'étendant le long de la deuxième direction d'extension (Y) beaucoup moins que l'extension de la totalité du panneau le long de la même deuxième direction d'extension (Y) et qui est espacée de la face externe de panneau (20''),
des ouvertures de fixation auxiliaires (231) étant obtenues sur ladite paroi de blocage auxiliaire (230', 330') pour la fixation, de manière amovible, d'un élément de finition (4) ou d'une unité modulaire (1) équivalente.

3. Unité modulaire (1) selon l'une quelconque des revendications précédentes, dans laquelle les ouvertures de fixation (211, 221) et les ouvertures de fixation auxiliaires (231) sont des œillets comprenant une région à section réduite (222) comparativement à une région à section normale (223) pour permettre à une tête d'une vis ou d'un clou (5) de passer à partir de la région à section normale (223) et empêcher la vis ou le clou (5) de sortir de la région à section réduite (222).

4. Unité modulaire (1) selon la revendication 3, dans laquelle derrière la paroi de blocage (210', 220' ; 310') et/ou derrière la paroi de blocage auxiliaire (230'), c'est-à-dire sur le côté de la paroi de blocage faisant face à la face externe de panneau (20''), près de l'une ou de plusieurs des ouvertures de fixation (211, 221) ou des ouvertures de fixation auxiliaires (231), au moins un élément élastique (6) est positionné, approprié pour subir une déformation élastique et fixer par encliquetage la vis ou le clou (5) de sorte que le déplacement en translation de la vis ou du clou (5) soit empêché le long d'une direction (K) perpendiculaire à la direction d'insertion de la vis dans les ouvertures de fixation ou les ouvertures de fixation auxiliaires, ladite direction d'insertion étant sensiblement parallèle à la troisième direction d'extension (Z).

5. Unité modulaire (1) selon la revendication 4, dans laquelle l'élément élastique (6) comprend un œillet d'élément élastique ayant une région à section réduite (222') comparativement à une région à section normale (223') pour permettre à une tête d'une vis ou d'un clou (5) de passer à partir de la région à section normale (223') et empêcher la vis ou le clou (5) de sortir de la région à section réduite (222').

6. Unité modulaire (1) selon l'une quelconque des revendications précédentes, dans laquelle le panneau droit (20) et/ou le panneau gauche (30) et/ou le panneau de dessous (10), près du bord de panneau supérieur (21, 31) ou du bord de panneau inférieur (22, 32), comprend une paroi de verrouillage horizontale (115, 215, 315, 225), qui s'étend sur un plan parallèle à la troisième direction d'extension (Z) et facultativement perpendiculaire uniquement à la première direction d'extension (X), des ouvertures de fixation (215', 315') étant obtenues sur ladite paroi de verrouillage horizontale (115, 215, 315, 225) pour la fixation, de manière amovible, d'un élément de finition (4) ou une unité modulaire (1) équivalente.

7. Unité modulaire (1) selon l'une quelconque des revendications précédentes, comprenant une porte apte à être ancrée de manière rotative à l'unité modulaire (1), comprenant un panneau externe (41) constitué d'un matériau transparent ou translucide,
une feuille imprimée (44), comprenant une illustration ou une décoration, un cadre de support de finition (45) constitué d'une tôle métallique fine ou d'une barre de section en aluminium ou d'un matériau plastique ou de fibres de verre ou de fibres de carbone et comprenant une paroi de verrouillage de finition (211', 221') et/ou une paroi de verrouillage de finition auxiliaire (231'), un ou plusieurs éléments de fixation (51), tels que des clous ou des vis, étant fixés sur ledit panneau externe (41), lesquels éléments de fixation fixent de manière amovible le panneau externe (41) à la paroi de verrouillage de finition (211', 221') et/ou à la paroi de verrouillage auxiliaire (231'),
ladite feuille imprimée (44) étant ancrée entre le panneau externe (41) et la paroi de verrouillage de finition (211', 221') et/ou la paroi de verrouillage auxiliaire (231').

8. Unité modulaire (1) selon l'une quelconque des revendications 1 à 6, comprenant une porte apte à être ancrée de manière rotative à l'unité modulaire (1), comprenant un panneau externe (41) comprenant une illustration ou une décoration,
un cadre de support de finition (45) constitué d'une tôle métallique fine ou d'une barre de section en aluminium ou d'un matériau plastique ou de fibres de verre ou de fibres de carbone, ledit cadre de support de finition (45) comprenant une paroi de verrouillage de finition (211', 221') et/ou une paroi de verrouillage de finition auxiliaire (231'), un ou plusieurs éléments de fixation (51), tels que des clous ou des vis, étant fixés sur ledit panneau externe (41), lesquels éléments de fixation fixent de manière amovible le panneau externe (41) à la paroi de verrouillage de finition (211', 221') et/ou à la paroi de verrouillage auxiliaire (231'),
ledit panneau externe (41) ayant une épaisseur qui est inférieure ou égale à vingt-cinq millimètres, de préférence inférieure ou égale à huit millimètres.

9. Module de type boîte (100, 101) pour un article d'ameublement, tel qu'une cuisine modulaire, comprenant une unité modulaire (1) selon l'une quelconque des revendications 1 à 8 et au moins un élément de finition (4) sur lequel des éléments de fixation (51) insérés dans une ou plusieurs ouvertures de fixation (211, 221) ou ouvertures de fixation auxiliaires (231) sont ancrés.

10. Module de type boîte (100, 101) selon la revendication 9, dans lequel l'élément de finition comprend un panneau externe (41) constitué d'un matériau transparent ou translucide et une feuille imprimée (44), comprenant une illustration ou une décoration, ladite feuille imprimée (44) étant apte à être ancrée de manière stable entre le panneau externe (41) et la paroi de blocage (210', 220' ; 310') et/ou la paroi de blocage auxiliaire (230', 330'), un ou plusieurs éléments de fixation (51), tels que des clous ou des vis, étant fixés sur ledit panneau externe (41) pour être ancrés de manière amovible à la paroi de blocage (210', 220' ; 310') et/ou à la paroi de blocage auxiliaire (230', 330').

11. Module de type boîte (100, 101) selon la revendication 10, dans lequel la feuille imprimée (44) comprend des ouvertures d'ancrage (441) appropriées pour être traversées par les éléments de fixation (51).

12. Module de type boîte (100, 101) selon la revendication 10 ou 11, dans lequel le panneau externe (41) comprend un cadre de support (43) joint au panneau externe (41), de préférence au moyen d'une couche adhésive (42), et dans lequel les un ou plusieurs éléments de fixation (51) sont fixés au cadre de support (43), et dans lequel la feuille imprimée (44) est ancrée au cadre de support (43) au moyen des un ou plusieurs éléments de fixation (51).

13. Module de type boîte (100, 101) selon la revendication 12, dans lequel un élément d'éclairage, tel qu'une bande à DEL, est reçu sur le cadre de support (43), dans l'espace entre la feuille imprimée (44) et le panneau externe (41).

14. Module de type boîte (100, 101) selon la revendication 9, dans lequel l'élément de finition comprend un panneau externe (41) comprenant une illustration ou une décoration, un ou plusieurs éléments de fixation (51), tels que des clous ou des vis, étant fixés sur ledit panneau externe (41) pour être ancrés de manière amovible à la paroi de blocage (210', 220' ; 310') et/ou à la paroi de blocage auxiliaire (230', 330'),
ledit panneau externe (41) ayant une épaisseur qui est inférieure ou égale à vingt-cinq millimètres, de préférence inférieure ou égale à huit millimètres.

15. Module de type boîte (100, 101) selon la revendication 14, dans lequel l'élément de finition est constitué de pierre, ou de métal ou de grès, ou de MDF, ou de PVC, ou de PET, ou de verre.

16. Article d'ameublement (1000), comprenant au moins deux unités modulaires (1) selon l'une quelconque des revendications 1 à 8, jointes l'une à l'autre au moyen d'éléments de fixation de module (52) insérés dans l'une ou plusieurs des ouvertures de fixation (211, 221) et/ou des ouvertures de fixation auxiliaires (231) de chacune desdites au moins deux unités modulaires (1).

17. Procédé de fabrication d'une unité modulaire (1) selon l'une quelconque des revendications 1 à 8, comprenant les étapes de :
- la fourniture d'une tôle métallique (1') munie d'affaiblissements (12', 13') qui s'étendent le long de la première direction d'extension (X) et comprenant un bord supérieur (21) et un bord inférieur (22), dans lequel, près desdits bords inférieur (22) et supérieur (21), ladite tôle métallique (1') comprend un pli (210, 220) de la tôle métallique comprenant une paroi de blocage (210', 220' ; 310') s'étendant le long de la première direction d'extension (X) beaucoup moins que l'extension de la totalité de la tôle métallique (1') le long de la même première direction d'extension (X) et qui est espacée d'une face de tôle métallique externe (1") ;
- le pliage de la tôle métallique (1') le long des affaiblissements (12', 13') pour obtenir l'unité modulaire (1) de sorte qu'au moins le panneau de dessous (10) soit entre deux affaiblissements (12', 13').
